# EUROPÄISCHE PATENTANMELDUNG

(11) **EP 3 054 319 A1**
(43) Veröffentlichungstag der Anmeldung: **10.08.2016**
(21) Anmeldenummer: 16154489.5
(22) Anmeldetag: 05.02.2016
(51) Int. Cl.: G01T 1/167, G01T 1/20

(54) **VORRICHTUNG UND VERFAHREN ZUR DETEKTION VON RADIOAKTIVER STRAHLUNG**

(30) Priorität: 06.02.2015 DE 102015101764
(71) Anmelder: Thermo Fisher Scientific Messtechnik GmbH, 91056 Erlangen (DE)
(72) Erfinder: Trost, Norbert, 91056 Erlangen (DE); Leder, Erich, 91336 Heroldsbach (DE)
(74) Vertreter: Schlögl, Markus

(57) **Zusammenfassung**

Vorrichtung (2) zur Detektion von radioaktiver Strahlung mit zumindest einem Detektorelement (4) umfassend
- einen Szintillator (6) aus einem für vom Szintillator (6) emittierte Photonen durchlässigen Material, welcher eine erste Oberfläche (12a) und eine der ersten Oberfläche (12a) gegenüberliegende zweite Oberfläche (12b) aufweist, die sich jeweils von einer ersten Seitenfläche (11a) des Szintillators (6) zu einer der ersten Seitenfläche (11a) gegenüberliegenden zweiten Seitenfläche (11b) des Szintillators (6) erstrecken,
- einen Träger (8) aus einem für vom Szintillator (6) emittierte Photonen durchlässigen Material, welcher eine erste Oberfläche (14a) und eine der ersten Oberfläche (14a) gegenüberliegende zweite Oberfläche (14b) aufweist, die sich jeweils von einer ersten Seitenfläche (15a) des Trägers (8) zu einer der ersten Seitenfläche (15a) gegenüberliegenden zweiten Seitenfläche (15b) des Trägers (8) erstrecken, wobei die erste Oberfläche (14a) des Trägers (8) optisch mit der ersten Oberfläche (12a) des Szintillators (6) verbunden ist, und
- zumindest einen Lichtsensor (10), der an einer Seitenfläche (16a, 16b) des Detektorelementes (4) angeordnet und optisch mit der ersten Seitenfläche (11a) des Szintillators (6) und/oder der ersten Seitenfläche (15a) des Trägers (8) verbunden ist.

Verfahren zur Detektion von radioaktiver Strahlung mit einer solchen Vorrichtung (2), bei der von dem Szintillator (6) emittierte Photonen (30) durch den Träger (8) zu dem Lichtsensor (10) geleitet und in ein Signal (34) umgewandelt werden.

## Beschreibung

Die Erfindung betrifft eine Vorrichtung und ein Verfahren zur Detektion von radioaktiver Strahlung, die beispielsweise bei der Kontaminationsmessung in Kontaminationsmonitoren in nukleartechnischen Anlagen zum Einsatz kommt.

Zur Messung radioaktiver Kontaminationen ist es beispielsweise bekannt, Detektorelemente mit einer circa 0,25 bis 1 mm dicken Folie aus einem szintillierenden Material zu verwenden. Die durch die radioaktive Strahlung von dem Szintillator erzeugten Photonen werden mit einem an der Rückseite des Szintillators angeordnetem Lichtsensor, üblicherweise eine Photoelektronenvervielfacher-Röhre (Photomultiplier tube), erfasst und in ein elektrisches Signal umgewandelt. Bei bekannten Fokussierungsverfahren, welche die Photonen in den Lichtsensor leiten sollen, treten jedoch oftmals hohe Verluste auf, da das Licht zu einem Großteil an anderen Positionen aus dem Detektorelement austritt.

Eine andere Methode zur Messung radioaktiver Kontaminationen unter Verwendung dünner Szintillatorfolien ist beispielsweise in DE 10 2005 017 557 B4 beschrieben. Auf einer Rückseite des Szintillators ist eine wellenlängenschiebende, lichtleitende Faser spiralförmig aufgebracht, wobei deren beide Enden in einen Lichtsensor bzw. eine Auswerteeinheit geführt werden. Dabei wird jedoch nur ein kleiner Teil der vom Szintillator emittierten Photonen in Faserrichtung weitergeleitet, sodass eine Koinzidenzschaltung erforderlich ist, um ein akzeptables Signal-Rausch-Verhältnis zu erhalten.

Ebenfalls bekannt ist es, an den Rändern einer Szintillatorfolie wellenlängenschiebende Fasern anzuordnen, um das Licht in den Lichtsensor zu leiten bzw. in diesem zu sammeln, wobei sich jedoch aufgrund hoher Verluste bei der Weiterleitung der Photonen in Faserrichtung nur ungenügende Ergebnisse erzielen lassen.

Die in der DE 102 08 960 B4 offenbarte Vorrichtung zur Erkennung einer radioaktiven Kontamination umfasst einen Lichtleiter in Form einer flachen Scheibe mit jeweils an den Flachseiten angeordneten Detektionselementen, um eine simultane Messung zweier Objekte, z.B. beider Handinnenflächen, durchführen zu können. Die Szintillationsstrahlung aus dem Lichtleiter wird mit einem optoelektronischen Zähler erfasst. Dabei weist der Szintillator einen kleineren Brechungsindex auf als der Lichtleiter, um Reflexionen bei dem Eintritt des Lichts in den Lichtleiter weitgehend zu vermeiden.

Es ist Aufgabe der Erfindung eine Vorrichtung sowie ein Verfahren anzugeben, mit dem radioaktive Strahlung zuverlässig und kostengünstig detektiert werden kann.

Die erstgenannte Aufgabe wird gelöst mit einer Vorrichtung mit den Merkmalen gemäß Patentanspruch 1. Die Vorrichtung zur Detektion von radioaktiver Strahlung, umfasst zumindest ein Detektorelement, welches einen Szintillator, einen Träger und zumindest einen Lichtsensor aufweist. Der Szintillator besteht aus einem für vom Szintillator emittierte bzw. erzeugte Photonen durchlässigen Material und weist eine erste Oberfläche und eine der ersten Oberfläche gegenüberliegende zweite Oberfläche auf, die sich jeweils von einer ersten Seitenfläche des Szintillators zu einer der ersten Seitenfläche gegenüberliegenden zweiten Seitenfläche des Szintillators erstrecken. Ebenso besteht der Träger aus einem für vom Szintillator emittierte bzw. erzeugte Photonen durchlässigen Material und weist eine erste Oberfläche und eine der ersten Oberfläche gegenüberliegende zweite Oberfläche auf, die sich jeweils von einer ersten Seitenfläche des Trägers zu einer der ersten Seitenfläche gegenüberliegenden zweiten Seitenfläche des Trägers erstrecken. Die erste Oberfläche des Trägers ist optisch mit der ersten Oberfläche des Szintillators verbunden. Der zumindest eine Lichtsensor des Detektorelementes ist an einer Seitenfläche des Detektorelements angeordnet und optisch mit der ersten Seitenfläche des Szintillators und/oder der ersten Seitenfläche des Trägers verbunden.

Der Ausdruck durchlässiges bzw. transparentes Material ist dabei dahingehend zu verstehen, dass sowohl der Träger als auch der Szintillator aus einem Material bestehen, welches die Wellenlänge der im Szintillator erzeugten bzw. von diesem emittierten Photonen gut leitet. Mit anderen Worten: Die optische Dämpfung innerhalb des Szintillators und des Trägers ist gering. Typischerweise weisen der Szintillator und der Träger eine Dämpfungslänge von mehr als 1m auf. Dadurch wird die Anzahl der Photonen, die durch den Szintillator oder den Träger zu dem Lichtsensor geleitet werden erhöht und somit das Messsignal verbessert.

Die Vorrichtung weist zumindest ein Detektorelement mit einem Szintillator, einem Träger und zumindest einem Lichtsensor auf. Mit anderen Worten: Jedes Detektorelement umfasst einen Szintillator, einen Träger und zumindest einen Lichtsensor. Je nach Anwendung kann die Vorrichtung dabei als Handgerät, wie dies beispielsweise in einem Krankenhaus zum Einsatz kommt, mit nur einem Detektorelement ausgeführt sein oder z.B. als Material- oder Personenkontaminationsmonitor bis zu 100 oder sogar mehr Detektorelemente umfassen, um eine akzeptable Messdauer zu erreichen.

Die Vorrichtung ist insbesondere zur Detektion von β-Strahlung vorgesehen und der Szintillator ist ein β-Szintillator. Ein Material gilt als β-Szintillator, wenn es hinsichtlich einfallender β-Strahlung einen hohen Wirkungsgrad aufweist. Der Wirkungsgrad wird dabei durch den Anteil der einfallenden Strahlung, welcher zur Erzeugung von Photonen führt, in Bezug auf die gesamte einfallende Strahlung definiert. Bei einem hohen Wirkungsgrad wird somit eine hohe Anzahl an Photonen erzeugt, wenn β-Strahlung auf den Szintillator trifft. Ein β-Szintillator weist einen Wirkungsgrad von mindestens 30%, vorzugsweise mindestens 60%, besonders bevorzugt mindestens 90% in Bezug auf einen Szintillator aus Anthracen auf, welcher als Referenzmaterial verwendet wird, da dieser einen besonders hohen Wirkungsgrad bzw. eine sehr hohe Lichtausbeute hat. Als transparente β-Szintillatoren kommen beispielsweise die in der US 2014/0166889 A1 beschriebenen Materialien sowie weitere transparente Polymere, Plastikszintillatoren oder Kristall-Szintillatoren in Betracht. Zur Detektion von α-Strahlung oder Neutronen werden beispielsweise Szintillatoren auf Zinksulfidbasis verwendet. Da γ- und Röntgenstrahlung durch Comptonstreuung energiereiche Elektronen erzeugen, ist die Vorrichtung bzw. das Detektorelement grundsätzlich auch zur Detektion von γ- und Röntgenstrahlung geeignet. Für den Nachweis von γ- und Röntgenstrahlung kann bei größeren Energien ein dickerer Szintillator als für β-Strahlung nötig sein. Der Szintillator kann dann dicker und der Träger dünner gemacht werden, wobei im Extremfall lediglich ein Szintillator ohne Träger vorgesehen sein kann.

Die erste Oberfläche des Szintillators und die erste Oberfläche des Trägers sind optisch, beispielsweise mit einem optisch durchlässigen Klebstoff, miteinander verbunden. Bei einer bevorzugten Ausgestaltung weisen der Szintillator und der Träger eines Detektorelementes denselben bzw. einen nahezu identischen Brechungsindex auf, um Reflexionen innerhalb des Detektorelementes weitgehend zu vermeiden. Die Formulierung derselbe bzw. nahezu identischer Brechungsindex ist dahingehend zu verstehen, dass die Brechungsindizes sich nur so weit unterscheiden, dass zwischen dem Träger und dem Szintillator innerhalb des Detektorelementes keine optische Grenzfläche entsteht, Szintillator und Träger also ohne optische Trennschicht optisch miteinander verbunden sind. Szintillator und Träger stehen dadurch in optisch leitender Verbindung. Die Brechungsindizes des Szintillators und des Trägers gelten als dieselben bzw. identisch, sofern sich diese um maximal 10%, insbesondere um maximal 5% oder sogar maximal 2% voneinander unterscheiden. Durch dieselben Brechungsindizes wird gewährleistet, dass nahezu alle vom Szintillator emittierten Photonen in den Träger eintreten und den Lichtsensor erreichen. Bei Verwendung eines Klebstoffes ist dessen Brechungsindex idealerweise genau so groß bzw. nahezu identisch wie der Brechungsindex des Szintillators und der des Trägers, um eine optische Trennschicht, welche zu einer Reflexion oder Brechung der Strahlung an der Grenzfläche zwischen Träger und Szintillator führt, weitgehend zu vermeiden und möglichst viele Photonen in den Träger eintreten zu lassen.

Dadurch entsteht insgesamt ein Detektorelement, in dem die Ausbreitung des Lichts bzw. der erzeugten Photonen im Wesentlichen nur durch Totalreflexion an der Oberfläche des Detektorelementes, also an der Grenzfläche zur Luft bestimmt wird. Innerhalb des Detektorelementes selbst finden kaum Reflexionen oder Brechungen statt. Mit anderen Worten: Szintillator und Träger bilden einen einzigen Gesamtlichtleiter, sodass die inneren Verluste in dem Detektorelement minimiert sind, und das Licht vorwiegend an der aktiven Fläche des Lichtsensors austritt.

Auch andere Verbindungstechniken zur optischen Verbindung des Szintillators und des Trägers, die keine optische Grenzschicht entstehen lassen, wie beispielsweise optische Fette können verwendet werden. Direktes Verschweißen oder Umspritzen ist besonders vorteilhaft.

Ferner ist es von Vorteil, wenn der Träger ein Lichtleiter mit mindestens der Dämpfungslänge des Szintillators, also mehr als 1m ist. Der Träger bzw. Lichtleiter hat also eine Dämpfungslänge von wenigstens 1m, vorzugsweise 4m oder besonders bevorzugt 10m. Die Dämpfungslänge ist die Länge bzw. Wegstrecke, bei der die Intensität des Lichtstrahls auf den Wert 1/e, also auf etwa 37% abgesunken ist bei einer Wellenlänge von 425nm. Als Träger, mit anderen Worten als Lichtleiter, wird insbesondere ein Bauteil aus Kunststoff, wie z.B. aus Polymethylmethacrylat (PMMA) oder aus transparentem Polycarbonat (PC), oder aus Glas verwendet, dessen Brechungsindex an den Brechungsindex des Szintillators angepasst ist.

Die Fokussierung des Lichtes auf die aktive Fläche des Lichtsensors und somit eine Erhöhung der Nachweisempfindlichkeit kann weiter dadurch verstärkt werden, dass eine Oberfläche des Detektorelementes zumindest teilweise hochglanzpoliert ist. Unter Oberfläche ist dabei die gesamte Oberfläche eines Detektorelementes zu verstehen, also die zweite Oberfläche des Szintillators, die zweite Oberfläche des Trägers sowie die Seitenflächen des Szintillators und des Trägers, einschließlich des Abschnittes der Seitenfläche des Detektorelementes, an welcher der Lichtsensor angeordnet ist. Insbesondere ist die gesamte frei liegende Oberfläche des Detektorelementes bzw. eine Grenzfläche zwischen Detektorelement und Luft ausbildende Oberfläche vollständig hochglanzpoliert. Diese gesamte freiliegende Oberfläche umfasst somit alle vier Seitenflächen des Szintillators, alle vier Seitenflächen des Trägers sowie die zweite Oberfläche des Szintillators und die zweite Oberfläche des Trägers mit Ausnahme des Bereiches der Seitenfläche des Detektorelementes, in welchem der Lichtsensor angeordnet bzw. optisch mit der Seitenfläche des Detektorelementes verbunden ist. Dadurch wird das Licht an der Grenzfläche Detektorelement - Luft in einem weiten Winkelbereich, also für einen Großteil der Einfallswinkel, totalreflektiert. In dem Abschnitt der Seitenfläche des Detektorelementes, in dem der Lichtsensor angeordnet ist, besteht keine solche Grenzfläche, sodass das Licht somit hauptsächlich nur an der Position des Lichtsensors aus und somit zu einem Großteil in die aktive Fläche des Lichtsensors eintritt, wodurch die Lichtausbeute deutlich erhöht ist. Durch hochglanzpolierte Oberflächen werden Reflexionen der Photonen innerhalb des Detektorelementes bzw. an dessen Oberflächen um signifikant verbessert.

Um lediglich den Eintritt von ionisierender α- und β-Strahlung in den Szintillator zu erlauben, also einen störenden Einfall von Fremdlicht in das Detektorelement zu unterbinden, kann die Oberfläche des Detektorelements vollständig mit einer Schicht aus reflektierendem Material bedampft, mit anderen Worten verspiegelt werden, was sich jedoch nachteilig auf die an den Oberflächen stattfindenden Totalreflexionen auswirkt. Insbesondere hinsichtlich der Lichtausbeute des Detektorelementes ist es daher von Vorteil, das Detektorelement, also den Szintillator, den Träger und den Lichtsensor, zumindest teilweise von einem Reflektor zu umgeben. Mit anderen Worten ist das Detektorelement zumindest teilweise in einem bzw. innerhalb einem Reflektor bzw. eines als Reflektor dienenden Gehäuses aus einem reflektierenden Material angeordnet. Insbesondere ein an der Rückseite des Detektorelementes, also hinter der zweiten Oberfläche des Szintillators angebrachter Reflektor kann Lichtverluste weiter minimieren und verbessert dadurch die Eigenschaften des Detektorelementes. Dadurch lassen sich die Lichtausbeute und somit auch das Signal-Rausch-Verhältnis des Signals weiter verbessern, da das Licht lediglich auf der aktiven Fläche des Lichtsensors absorbiert wird und ansonsten, falls es z.B. noch nicht an der hochglanzpolierten Oberfläche des Detektorelementes reflektiert wurde, an dem Reflektor reflektiert und in den Träger zurückgeleitet wird. Vorzugsweise ist zwischen dem Reflektor und der Oberfläche des Detektorelementes ein Luftspalt vorhanden, um an der Oberfläche bzw. an den Grenzflächen des Detektorelementes zunächst eine ungestörte Totalreflexion zu erlauben. Der Reflektor bzw. zumindest die inneren Gehäuseflächen bestehen beispielsweise aus Aluminium, Teflon oder Titanoxid oder sind mit einer Reflektorfolie versehen. Auch ein Spiegel kann als Reflektor eingesetzt werden. Dabei kann jedes Detektorelement von einem separaten Reflektor umgeben sein. Bei Kontaminationsmonitoren mit mehreren Detektorelementen ist es auch denkbar, mehrere, z.B. jeweils vier Detektorelemente, in ein gemeinsames reflektierendes Gehäuse einzubauen.

Auf einer der ersten Oberfläche gegenüberliegenden zweiten Oberfläche des Szintillators kann zudem eine Folie, beispielsweise eine Titan-Folie oder eine aluminierte Kunststofffolie ebenfalls unter Ausbildung eines Luftspaltes zu der zweiten Oberfläche angeordnet sein, welche ein Einfallen ionisierender Strahlung auf den Szintillator erlaubt, aber gleichzeitig einen Einfall von störendem Fremdlicht von außen in das Detektorelement verhindert.

Ferner kann zumindest eine Seitenfläche des Detektorelementes von einem Reflektor, z.B. einem Spiegel umgeben sein, sodass Licht, welches nicht an der Oberfläche bzw. der Grenzfläche zur Luft totalreflektiert wurde und aus dem Detektorelement austritt, an dem Spiegel reflektiert wird. Der Spiegel ist wiederum vorzugsweise parallel und unter Ausbildung eines Luftspaltes, also mit Abstand zu der Seitenfläche des Detektorelementes angeordnet. Photonen, deren Auftreffwinkel an der ersten und zweiten Oberfläche des Trägers beispielsweise die Kriterien für Totalreflektion erfüllt, liegen an der Seitenfläche, also einer zu der zweiten Oberfläche senkrechten, seitlichen Oberfläche nicht im Winkelbereich für Totalreflektion. Das an den Seitenflächen des Detektorelements austretende Licht wird sodann mithilfe der spiegelnden Reflektoren in das Detektorelement zurückgeworfen, so dass sich der Winkel in Bezug auf die Oberflächen des Trägers nicht verändert. Dadurch bleibt der reflektierte Lichtstrahl an den beiden sich gegenüberliegenden Oberflächen des Trägers im Winkelbereich für Totalreflektion.

Da die Lichtausbreitung innerhalb des Detektorelements auf verlustfreier Totalreflexion beruht, wird das bei der Szintillation erzeugte Licht nahezu vollständig vom Lichtsensor aufgenommen, auch wenn die Oberfläche des Lichtsensors mehrere Größenordnungen kleiner ist, als die Oberfläche des Detektorelements. Dadurch wird auch die Nachweisempfindlichkeit unabhängig von der Position eines Szintillationsereignisses erhöht. Es ist nahezu gleichgültig, ob die Szintillation unmittelbar vor dem Lichtsensor stattfindet, oder an der gegenüberliegenden Seite des Detektorelements. Dadurch ergeben sich Detektoren mit hervorragender Homogenität des Ansprechvermögens.

Der Lichtsensor ist an einer Seitenfläche des Detektorelementes angeordnet, wobei es vorteilhaft ist, wenn die Seitenfläche des Detektorelements von der ersten Seitenfläche des Szintillators und von der ersten Seitenfläche des Trägers gebildet ist und der zumindest eine Lichtsensor zumindest teilweise mit der ersten Seitenfläche des Szintillators und zumindest teilweise mit der ersten Seitenfläche des Trägers optisch verbunden ist. Die Seitenfläche des Detektorelementes ist somit eine gemeinsame, teilweise von einer Seitenfläche des Trägers und teilweise von einer Seitenfläche des Szintillators gebildete Seitenfläche. Dadurch wird der Einfall der Photonen in den Lichtsensor und somit die Lichtausbeute erhöht.

Der Lichtsensor und die Seitenfläche des Detektorelementes bzw. die gemeinsame Seitenfläche des Trägers und des Szintillators sind vorzugsweise ebenfalls optisch, ebenfalls z.B. mit einem optisch durchlässigen Klebstoff, mit der Seitenfläche verbunden.

Bei einer bevorzugten Weiterbildung, erstreckt sich der zumindest eine Lichtsensor, welcher an der ersten Seitenfläche des Szintillators und der ersten Seitenfläche des Trägers angeordnet ist, von der zweiten Oberfläche des Szintillators zu der zweiten Oberfläche des Trägers. Mit anderen Worten: Die Gesamtdicke von Szintillator und Träger entspricht einer Kantenlänge der aktiven bzw. empfindlichen Fläche des Lichtsensors, welcher üblicherweise eine Größe von 6x6 mm oder 3x3 mm aufweist. Die Gesamtdicke des Detektorelements ist also genauso groß wie eine Abmessung des Lichtsensors, der an der von dem Träger und dem Szintillator gemeinsam gebildeten Seitenfläche angeordnet ist.

Der Szintillator und der Träger des Detektorelements können grundsätzlich verschiedene Formen aufweisen, beispielsweise rechteckig oder rund ausgebildet sein. In jedem Fall ist es jedoch von Vorteil, wenn die erste Oberfläche des Szintillators und die erste Oberfläche des Trägers, welche optisch miteinander verbunden sind, gleich groß sind, also dieselbe Fläche aufweisen, sodass Szintillator und Träger flächendeckend und vollständig aufeinander aufgebracht werden können und die Lichtausbeute erhöht wird. Der Szintillator und der Träger sind insbesondere als Platten ausgebildet, sodass die Oberflächen des Szintillators und die Oberflächen des Trägers als Flachseiten bzw. ebene oder flache Oberflächen ausgebildet sind. Sowohl der Szintillator als auch der Träger weisen dabei jeweils zwei einander parallel gegenüberliegende Flachseiten auf. Die erste Flachseite des Szintillators, mit anderen Worten die - bezogen auf die Einfallrichtung der zu detektierenden Strahlung - hintere Flachseite, und die erste Flachseite des Trägers, also die - bezogen auf die Einfallrichtung der zu detektierenden Strahlung - vordere Flachseite, stehen flächig miteinander in Kontakt und sind optisch flächig verbunden.

Als Lichtsensor kommen verschiedenste Sensoren, wie z.B. Photodetektoren oder Halbleiterdetektoren in Betracht. Vorzugsweise ist der zumindest eine Lichtsensor allerdings ein Silicon-Photomultiplier (SiPM), der in seiner spektralen Empfindlichkeit an das Emissionsspektrum des Szintillators angepasst ist. Ein Silicon-Photomultiplier ermöglicht eine sehr kompakte und kostengünstige Bauweise des Detektorelementes. Zudem wird bei einer Vorrichtung mit mehreren, benachbarten Detektorelementen, wie dies bei Kontaminationsmonitoren üblich ist, durch die Verwendung von Silicon-Photomultipliern als Lichtsensor die tote Zone, also der Bereich, in welchem der Lichtsensor keine Empfindlichkeit zeigt, minimiert. Insbesondere für Koinzidenzmessungen ist es hier notwendig, die Detektorelemente möglichst nahe zueinander anzuordnen. Aufgrund der erfindungsgemäßen Anordnung von Szintillator, Träger und Lichtsensor bzw. dem Aufbau des Detektorelementes zeigt das Detektorelement auch mit einem Silicon-Photomultiplier ein mit konventionellen Detektoren mit Röhrenphotomultipliern vergleichbares, gutes Signal-Rausch-Verhältnis.

Der Szintillator weist insbesondere eine Dicke von 0,1 bis 2 mm, vorzugsweise von 0,25 bis 1 mm auf. Bei innerhalb dieses Bereichs liegender Dicke wird βStrahlung aus Kernstrahlung weitgehend absorbiert, wohingegen γ-Strahlung nur wenig mit dem Szintillator wechselwirkt. Dadurch wird der die Nachweisgrenzen für radioaktive Strahlung bzw. Kontamination beeinflussende Gammauntergrund minimiert. Der Träger weist insbesondere eine Dicke von 2 bis 8 mm, vorzugsweise von 5 bis 6 mm auf. Die Dicke des gesamten Detektorelementes ist klein im Vergleich zu dessen Breite und Länge. Das Verhältnis von Dicke zu Breite sowie das Verhältnis von Dicke zu Länge beträgt insbesondere wenigstens 1:10.

Zur Auswertung der von dem Lichtsensor erfassten β-Strahlung weist die Vorrichtung insbesondere eine Auswerteeinheit auf.

Bei einer bevorzugten Ausgestaltung der Vorrichtung umfasst diese zumindest zwei Detektorelemente, die in Einfallrichtung der radioaktiven Strahlung hintereinander und jeweils optisch voneinander getrennt angeordnet sind. Mit anderen Worten: Die Vorrichtung umfasst mehrere Detektorelemente, die jeweils paarweise hintereinander angeordnet sind, wobei die jeweils zusammengehörenden beiden Detektorelemente optisch voneinander getrennt sind. Die optische Trennung kann beispielsweise durch eine schwarze Kunststofffolie oder eine dünne Metallfolie erfolgen. Dabei werden insbesondere Silizium-Photomultiplier als Lichtsensoren verwendet, sodass eine kompakte Vorrichtung entsteht, die insbesondere für Handgeräte vorteilhaft ist. Wird zudem als Trägermaterial Acrylglas verwendet, dient der Träger neben seiner Funktion als Lichtleiter gleichzeitig als bremsstrahlungsarmer Absorber für β-Strahlung.

Um die Absorption der β-Strahlung im Träger zu maximieren, kann es vorteilhaft sein, die jeweils paarweise angeordneten Detektorelemente symmetrisch zu der optischen Trennung bzw. Lichtbarriere zu orientieren. Die beiden Träger sind also einander zugewandt und nur durch die Lichtbarriere getrennt. Dadurch erhält man eine ausreichende Dicke an absorbierendem Material, sodass die einfallende β-Strahlung den Szintillator des - bezogen auf die Einfallrichtung - hinteren Detektorelementes nicht erreicht.

Die Auswerteeinheit der Vorrichtung ist vorzugsweise ferner derart ausgebildet, dass eine in beiden Detektorelementen auftretende radioaktive Strahlung ausblendbar ist. Zudem ist die Auswerteeinheit insbesondere dazu ausgebildet, dass ein Messwert für β-Strahlung und ein Messwert für γ-Strahlung separat bzw. unabhängig voneinander durch Differenzbildung ermittelbar sind.

Eine solche Vorrichtung kann insbesondere zur Detektion von β-Strahlung in γ-/β-Feldern verwendet werden, da die β-Strahlung nur in dem dem Eintrittsfenster der radioaktiven Strahlung zugewandten Detektorelement auftritt. γ-Strahlung hingegen durchdringt die Lichtbarriere sowie die Träger bzw. Lichtleiter beider Detektorelemente und tritt in beiden Detektorelementen auf, lässt sich also sowohl mit dem Lichtsensor des vorderen - bezogen auf die Einfallrichtung - als auch mit dem Lichtsensor des hinteren Detektorelementes registrieren. Mit anderen Worten: γ-Strahlung erzeugt sowohl in dem Szintillator des vorderen Detektorelementes als auch in dem Szintillator des hinteren Detektorelementes einen Lichtblitz. Unerwünschte γ-Strahlung sowie auch kosmische Strahlung können jedoch beispielsweise durch eine Koinzidenzschaltung ausgeblendet werden. Eine solche Anordnung ermöglicht daher sehr gute Kontaminationsnachweisgrenzen bei hohem γ-Untergrund sowie eine separate Anzeige von γ- und β-Strahlung. Die Träger der Detektorelemente dienen zudem gleichzeitig als β-Strahlungsabschirmung für das hintere Detektorelement.

Die zweitgenannte Aufgabe wird gelöst mit einem Verfahren mit den Merkmalen gemäß Patentanspruch 15. Zur Detektion von radioaktiver Strahlung mit einer oben beschriebenen Vorrichtung werden von dem Szintillator emittierte Photonen durch den Träger zu dem zumindest einen Lichtsensor geleitet und in ein Signal umgewandelt. Dabei wird eine radioaktive Strahlung bzw. ein Strahlungsereignis insbesondere nur dann registriert, wenn zumindest zwei Lichtsensoren im Wesentlichen gleichzeitig ein Signal erzeugen. Es wird also nur im Falle einer Koinzidenz von Signalen bzw. von auf den Lichtsensor auftreffenden Photonen in zumindest zwei Lichtsensoren ein Ausgangssignal erzeugt, welches eine radioaktive Kontamination anzeigt. Hierfür ist beispielsweise eine Auswerteeinheit vorgesehen, welche die vom Lichtsensor erzeugten elektrischen Signale verarbeitet und als Messwert ausgibt. Dieser Messwert bzw. das Ausgangssignal kann beispielsweise zur Anzeige eines Alarmsignals herangezogen werden. Die zu detektierende radioaktive Strahlung ist insbesondere β-Strahlung und/oder α-Strahlung.

Die Erfindung wird nachstehend auch hinsichtlich weiterer Merkmale und Vorteile anhand der Beschreibung von Ausführungsbeispielen und unter Bezugnahme auf die beiliegenden Zeichnungen näher erläutert. Es zeigen jeweils in einer schematischen Prinzipskizze:
- FIG 1: eine Vorrichtung zur Detektion von radioaktiver Strahlung in einer perspektivischen Darstellung,
- FIG 2: eine Vorrichtung gemäß Fig. 1 entlang der Schnittebene II, wobei das Detektorelement teilweise von einem Reflektor umgeben ist,
- FIG 3: eine Vorrichtung mit einem Reflektor,
- FIG 4: eine Vorrichtung mit zwei - bezogen auf die Einfallrichtung - hintereinander angeordneten Detektorelementen,
- FIG 5: eine Vorrichtung mit mehreren Detektorelementen zur Detektion einer radioaktiven Strahlung.

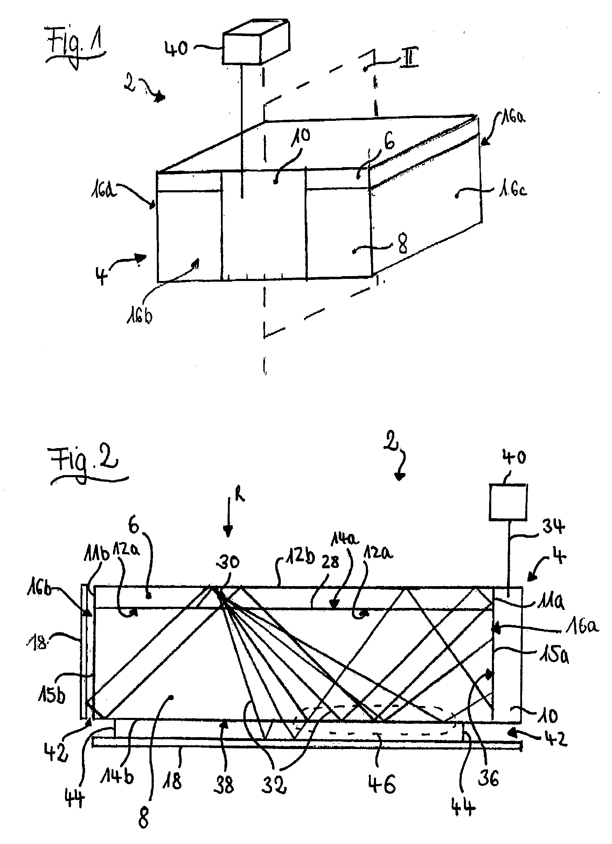

Fig. 1 zeigt eine Vorrichtung 2 zur Detektion einer radioaktiven Strahlung bzw. Kontamination, insbesondere zum Einsatz zur Messung von α- und β-Strahlung, mit einem Detektorelement 4. Das Detektorelement 4 umfasst einen Szintillator 6, einen Träger 8 und einen Lichtsensor 10.

Der Szintillator 6 besteht grundsätzlich aus einem Material, welches für die in dem Szintillator 6 erzeugten Photonen transparent ist. Der Szintillator 6 ist ferner ein β-Szintillator, welcher einen hohen Wirkungsgrad hinsichtlich der einfallenden β-Strahlung aufweist, sodass eine hohe Anzahl von Photonen erzeugt wird. Er ist in Form einer Platte ausgebildet und etwa 0,5 mm dick. Der Träger 8 besteht ebenfalls aus einem Material, welches für die in dem Szintillator 6 erzeugten Photonen transparent ist, also aus einem die Wellenlänge der von dem Szintillator 6 emittierten Photonen gut lichtleitenden Material wie PMMA, PC, Polystyrol oder Glas. Der Träger 8 weist mindestens die Transparenz bzw. Dämpfungslänge des Szintillators auf. Besonders vorteilhaft ist es, wenn der Träger 8 eine größere Transparenz bzw. Dämpfungslänge aufweist. Der Szintillator 6 und der Träger 8 weisen einen nahezu identischen Brechungsindex auf. Der Träger 8 ist ebenfalls als Platte mit einer Dicke von etwa 5 mm ausgebildet.

Wie in Fig. 2 dargestellt, umfasst der Szintillator 6 eine erste Oberfläche 12a und eine der ersten Oberfläche 12a gegenüberliegende und parallel zu dieser verlaufende zweite Oberfläche 12b auf, die jeweils als Flachseiten 12a, 12b ausgebildet sind. Der Träger 8 umfasst ebenfalls eine erste, als Flachseite ausgebildete Oberfläche 14a und eine der ersten Oberfläche 14a gegenüberliegende und parallel zu dieser verlaufende zweite, als Flachseite ausgebildete Oberfläche 14b. Bei dem Detektorelement 4 ist die erste Flachseite 12a des Szintillators 6 mit der ersten Flachseite 14a des Trägers 8 mittels einer optisch durchlässigen Szintillator-Träger-Verbindung 28 optisch verbunden, wobei die beiden Komponenten entweder direkt miteinander oder auch indirekt über einen optisch durchlässigen Klebstoff miteinander verbunden sein können. Um eine hohe Lichtausbeute zu erzielen, sind die erste Flachseite 12a des Szintillators 6 und die erste Flachseite 14a des Trägers 8 gleich groß und über die gesamte Fläche optisch miteinander verbunden.

Der Lichtsensor 10 ist ein Silicon-Photomultiplier und an einer von der Seitenfläche 15a des Trägers 8 und von der Seitenfläche 11a des Szintillators 6 gebildeten Seitenfläche 16a des Detektorelementes 4 angeordnet und optisch mit der Seitenfläche 16a verbunden. Die Kantenlänge der aktiven Fläche 36 des Lichtsensors 10 entspricht einer Gesamtdicke des Trägers 8 und des Szintillators 6, der Lichtsensor 10 erstreckt sich also in Bezug auf die Einfallsrichtung R vollständig von der zweiten Oberfläche 12b des Szintillators 6 hin zu der zweiten Oberfläche 14b des Trägers 8.

Die frei liegende Oberfläche des Detektorelementes 4, also die zweite Flachseite 12b des Szintillators 8, die zweite Flachseite 14b des Trägers 6 sowie die Seitenflächen 16b, c, d bzw. die Seitenflächen 11b, c, d des Szintillators 6 und die Seitenflächen 15b, c, d des Trägers 8 sowie die nicht mit dem Lichtsensor 10 optisch gekoppelten Bereiche der Seitenfläche 16a des Detektorelementes 4 bzw. der Seitenfläche 11a des Szintillators 6 und der Seitenfläche 15a des Trägers 8 sind hochglanzpoliert. Trifft ionisierende Strahlung, α- oder β-Strahlung, auf den Szintillator 6 werden darin Lichtblitze erzeugt bzw. Photonen 30 emittiert, die α- oder β-Strahlung hinterlässt also eine Ionisationsspur und damit eine Lichtspur im Szintillator 6. Die Photonen 30 werden durch den Szintillator 6 und den Träger 8 entlang der Wege 32 zum Lichtsensor 10 geleitet. Die hochglanzpolierte Oberfläche sorgt dafür, dass an den Grenzflächen 38 Totalreflexionen stattfinden, die einen Austritt der Photonen 30 verhindern. Nach einer Vielzahl von Reflexionen werden die Photonen 30 schließlich auf der Oberfläche des Lichtsensors 10 absorbiert. In der aktiven Fläche 36 des Lichtsensors 10 werden die Photonen 30 in ein elektrisches Signal umgewandelt, aus welchem in einer Auswerteeinheit 40 nach konventionellen Verfahren der Strahlenmesstechnik β- und γ-Kontaminationsmesswerte gebildet werden.

An der Rückseite des Detektorelementes 4 bzw. hinter der zweiten Flachseite 14b des Trägers 8 ist parallel zu dieser unter Ausbildung eines Luftspaltes 42 ein Reflektor 18 angeordnet. Hierfür ist das Detektorelement 4 lediglich an wenigen Abstützpunkten 44 in Form minimaler punktförmiger Auflagen gegenüber dem Reflektor 18 abgestützt. An der dem Lichtsensor 10 gegenüberliegenden Seitenfläche 16b des Detektorelementes 4, wie vorteilhaft auch den drei weiteren Seitenflächen 16a, 16c, 16d, ist ebenfalls ein Reflektor 18 in Form eines reflektierender Spiegels vorgesehen, welcher parallel zu der Seitenfläche 16b orientiert ist. Photonen 30 bzw. ein Lichtstahl, der an einer Grenzfläche nicht totalreflektiert wurde, wird an dem Reflektor 18 reflektiert und tritt wieder in den Träger 8 bzw. in den Lichtleiter ein. Dadurch wird die Lichtausbeute des Detektorelementes erhöht, da Photonen 30, die an der Seitenfläche 16b, bzw. auch an den drei weiteren Seitenflächen 16a, 16c, 16d, nicht in dem Winkelbereich für Totalreflexion liegen erneut in den Träger 8 eintreten und an der zweiten Flachseite 12b des Szintillators 6 und der zweiten Flachseite 14b des Trägers 8 weiterhin im Winkelbereich für Totalreflexion bleiben. In dem Bereich 46 sind beispielhaft Ausbreitungswege 32 mit Totalreflexion an der Grenzfläche zur Luft gezeigt.

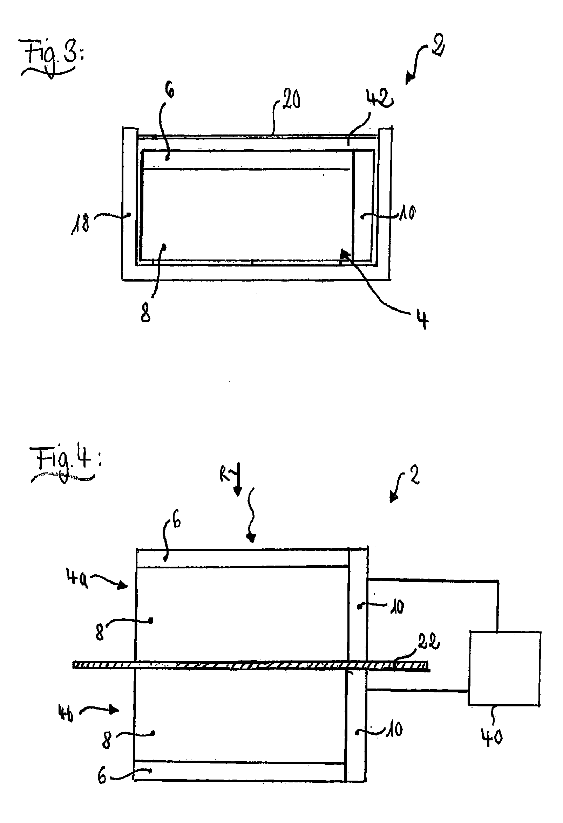

Bei einer in Fig. 3 dargestellten Ausführungsform ist das Detektorelement 4 in einem Reflektor 18 bzw. in einem Gehäuse, dessen innere Gehäuseflächen aus einem reflektierenden Material, bestehen, angeordnet. Das Detektorelement ist derart in dem Reflektor 18 angeordnet, dass dessen Unterseite, also die zweite Flachseite 14b des Trägers 8 und dessen Seitenflächen 16a, b, c, d von dem Reflektor 18 umgeben sind. Dabei kann wiederum jeweils ein Luftspalt 42 zwischen dem Detektorelement 4 und dem Reflektor ausgebildet sein. Auf der Oberseite des Detektorelements 4 steht der Reflektor 18 über die zweite Flachseite 12b des Szintillators 6 hervor. Die zweite Flachseite 12b des Szintillators 6 ist von einer α- und β-Strahlung durchlassenden lichtdichten Folie 20 aus aluminiertem Kunststoff unter Ausbildung eines Luftspaltes 42 bedeckt, welche zusammen mit dem Reflektor 18 das Detektorelement 4 vollständig umschließt.

In Fig. 4 ist eine Vorrichtung 2 dargestellt, die aus zwei Detektorelementen 4a, 4b besteht, die - bezogen auf die Einfallrichtung R der radioaktiven Strahlung - hintereinander angeordnet sind. Die zwei Detektorelemente 4a, 4b sind durch eine Lichtbarriere 22, z.B. eine Aluminiumfolie, optisch voneinander getrennt, um β- und γ-Strahlung getrennt voneinander zu erfassen. Die β- Strahlung wird in den Trägern 8 und der Lichtbarriere 22 vollständig absorbiert. Die durch β- und γ-Strahlung in dem vorderen Detektorelement 4a erzeugten Photonen können die Lichtbarriere 22 nicht überwinden und werden daher nur in dem vorderen Detektorelement 4a angezeigt. γ-Strahlung und kosmische Strahlung hingegen durchdringt die Träger 8 ohne wesentliche Abschwächung und wird in beiden Detektorelementen 4a, 4b gleichermaßen nachgewiesen. Durch die Ausblendung koinzidenter Signale mittels einer Auswerteeinheit 40 kann der störende Untergrund durch kosmische Strahlung (Myonen) ausgeblendet und die Nachweisgrenze für β-Kontamination verbessert werden. Durch Subtraktion der nachgewiesenen Ereignisse bzw. der gemessenen Impulsraten mittels der Auswerteeinheit 40 voneinander können Messwerte für reine β- und γ-Strahlung gebildet werden.

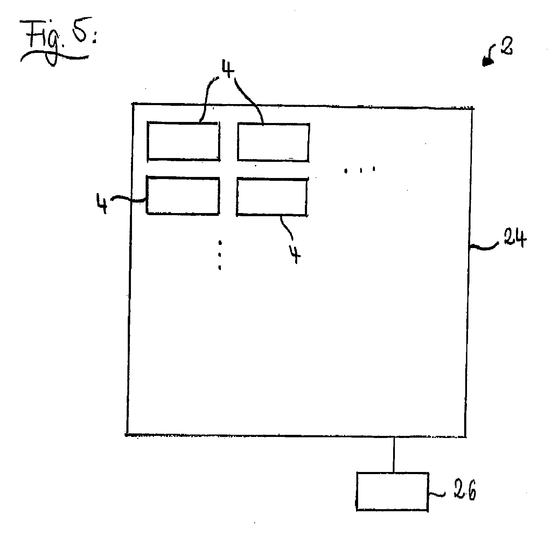

Fig. 5 zeigt eine Vorrichtung 2, die in Ganzkörpermonitoren 24 verwendet werden kann und mehrere Detektorelemente 4 umfasst. Die einzelnen Detektorelemente 4 sind mit einer Auswerteeinheit 26 verbunden, welche eine Auswertung der einzelnen, von den jeweiligen Lichtsensoren 10 der Detektorelemente 4 erzeugten Signale 34 mit in der Kernstrahlungstechnik üblichen Verfahren vornehmen kann.

Wird die Vorrichtung 2 betrieben, um eine radioaktive Strahlung zu detektieren, wird ein von dem Szintillator 6 emittiertes Photon 30 durch den Träger 8 zu dem Lichtsensor 10 geleitet und dort in ein Signal 34 umgewandelt. Umfasst ein Detektorelement 4 zwei Lichtsensoren 10 (nicht dargestellt), wird eine radioaktive Strahlung bzw. eine radioaktive Kontamination nur angezeigt, wenn die zwei Lichtsensoren 10 im Wesentlichen gleichzeitig ein Signal 34 erzeugen. Die Anzeige der radioaktiven Strahlung erfolgt beispielsweise durch die Auswerteeinheit 26, welche nur bei Koinzidenz zweier Signale 34 ein Ausgangssignal erzeugt.

### Bezugszeichenliste

- 2: Vorrichtung
- 4: Detektorelement
- 6: Szintillator
- 8: Träger
- 10: Lichtsensor
- 11a, b, c, d: Seitenflächen des Szintillators
- 12a: erste Flachseite des Szintillators
- 12b: zweite Flachseite des Szintillators
- 14a: erste Flachseite des Trägers
- 14b: zweite Flachseite des Trägers
- 15a, b, c, d: Seitenflächen des Trägers
- 16a,b, c, d: Seitenflächen des Detektorelements
- 18: Reflektor
- 20: Folie
- 22: Lichtbarriere
- 24: Monitor
- 26: Auswerteeinheit
- 28: Klebstoff
- 30: Photon
- 32: Weg
- 34: Signal
- 36: aktive Fläche des Lichtsensors
- 38: Grenzfläche
- 40: Auswerteeinheit
- 42: Luftspalt
- 44: Abstützpunkte
- 46: Bereich

## Patentansprüche

1. Vorrichtung (2) zur Detektion von radioaktiver Strahlung mit zumindest einem Detektorelement (4) umfassend
- einen Szintillator (6) aus einem für vom Szintillator (6) emittierte Photonen durchlässigen Material, welcher eine erste Oberfläche (12a) und eine der ersten Oberfläche (12a) gegenüberliegende zweite Oberfläche (12b) aufweist, die sich jeweils von einer ersten Seitenfläche (11a) des Szintillators (6) zu einer der ersten Seitenfläche (11a) gegenüberliegenden zweiten Seitenfläche (11b) des Szintillators (6) erstrecken,
- einen Träger (8) aus einem für vom Szintillator (6) emittierte Photonen durchlässigen Material, welcher eine erste Oberfläche (14a) und eine der ersten Oberfläche (14a) gegenüberliegende zweite Oberfläche (14b) aufweist, die sich jeweils von einer ersten Seitenfläche (15a) des Trägers (8) zu einer der ersten Seitenfläche (15a) gegenüberliegenden zweiten Seitenfläche (15b) des Trägers (8) erstrecken, wobei die erste Oberfläche (14a) des Trägers (8) optisch mit der ersten Oberfläche (12a) des Szintillators (6) verbunden ist, und
- zumindest einen Lichtsensor (10), der an einer Seitenfläche (16a, 16b) des Detektorelementes (4) angeordnet und optisch mit der ersten Seitenfläche (11a) des Szintillators (6) und/oder der ersten Seitenfläche (15a) des Trägers (8) verbunden ist.

2. Vorrichtung (2) nach Anspruch 1, wobei die Vorrichtung (2) zur Detektion von β-Strahlung vorgesehen ist und der Szintillator (6) ein β-Szintillator ist.

3. Vorrichtung nach Anspruch 1 oder 2, wobei der Szintillator (6) und der Träger (8) denselben Brechungsindex aufweisen.

4. Vorrichtung nach einem der vorhergehenden Ansprüche, wobei der Träger (8) als Lichtleiter eine Dämpfungslänge aufweist, die zumindest einer Dämpfungslänge des Szintillators (6) entspricht.

5. Vorrichtung (2) nach einem der vorhergehenden Ansprüche, bei der eine Oberfläche des Detektorelementes (4) zumindest teilweise hochglanzpoliert ist.

6. Vorrichtung (2) nach einem der vorhergehenden Ansprüche, bei der das zumindest eine Detektorelement (4) zumindest teilweise von einem Reflektor (18) umgeben ist.

7. Vorrichtung (2) nach einem der vorhergehenden Ansprüche, bei der die Seitenfläche (16a, 16b) des Detektorelements (4) von der ersten Seitenfläche (11a) des Szintillators (6) und von der ersten Seitenfläche (15a) des Trägers (8) gebildet ist und der zumindest eine Lichtsensor (10) zumindest teilweise mit der ersten Seitenfläche (11a) des Szintillators (6) und zumindest teilweise mit der ersten Seitenfläche (15a) des Trägers (8) optisch verbunden ist.

8. Vorrichtung nach Anspruch 7, wobei sich der zumindest eine Lichtsensor (10), welcher an der ersten Seitenfläche (11a) des Szintillators (6) und der ersten Seitenfläche (15a) des Trägers (8) angeordnet ist, von der zweiten Oberfläche (12b) des Szintillators (6) zu der zweiten Oberfläche (14b) des Trägers (8) erstreckt.

9. Vorrichtung (2) nach einem der vorhergehenden Ansprüche, mit zumindest einem Detektorelement (4), bei dem die erste Oberfläche (12a) des Szintillators (6) und die erste Oberfläche (14a) des Trägers (8) gleich groß sind und/oder der Szintillator (6) und der Träger (8) als Platten ausgebildet sind, sodass die Oberflächen (12a, 12b) des Szintillators (6) und die Oberflächen (14a, 14b) des Trägers (8) als Flachseiten ausgebildet sind.

10. Vorrichtung (2) nach einem der vorhergehenden Ansprüche, bei der der zumindest eine Lichtsensor (10) ein Silicon-Photomultiplier ist.

11. Vorrichtung (2) nach einem der vorhergehenden Ansprüche, bei der der Szintillator (6) eine Dicke von 0,1 bis 2 mm, vorzugsweise von 0,25 bis 1 mm aufweist und/oder der Träger (8) eine Dicke von 2 bis 8 mm, vorzugsweise von 5 bis 6 mm aufweist.

12. Vorrichtung (2) nach einem der vorhergehenden Ansprüche, mit einer Auswerteeinheit (40) zur Auswertung der von dem Lichtsensor (10) erfassten β-Strahlung.

13. Vorrichtung (2) nach einem der vorhergehenden Ansprüche, mit zumindest zwei Detektorelementen (4a, 4b), die in Einfallrichtung (R) der radioaktiven Strahlung hintereinander und jeweils optisch voneinander getrennt angeordnet sind.

14. Vorrichtung (2) nach Anspruch 13, mit einer Auswerteeinheit (40), die derart ausgebildet ist, dass eine in beiden Detektorelementen (4a, 4b) auftretende radioaktive Strahlung ausblendbar ist und/oder dass ein Messwert für β-Strahlung und ein Messwert für γ-Strahlung separat voneinander ermittelbar sind.

15. Verfahren zur Detektion von radioaktiver Strahlung mit einer Vorrichtung (2) nach einem der vorhergehenden Ansprüche, bei der von dem Szintillator (6) emittierte Photonen (30) durch den Träger (8) zu dem Lichtsensor (10) geleitet und in ein Signal (34) umgewandelt werden.

16. Verfahren nach Anspruch 15, bei dem eine radioaktive Strahlung, insbesondere eine β-Strahlung und/oder α-Strahlung, registriert wird, wenn zumindest zwei Lichtsensoren (10) im Wesentlichen gleichzeitig ein Signal (34) erzeugen.
